(19) Europäisches Patentamt
European Patent Office
Office européen des brevets

(11) **EP 4 737 238 A1**

(12) **EUROPEAN PATENT APPLICATION**

(43) Date of publication:
**06.05.2026 Bulletin 2026/19**

(21) Application number: **24210140.0**

(22) Date of filing: **31.10.2024**

(51) International Patent Classification (IPC):
**B60W 10/02** (2006.01)    **B60W 10/04** (2006.01)
**B60W 30/02** (2012.01)    **B60W 30/045** (2012.01)
**B60W 30/18** (2012.01)    B60W 10/16 (2012.01)

(52) Cooperative Patent Classification (CPC):
**B60W 10/02; B60W 10/04; B60W 10/16;**
**B60W 30/02; B60W 30/045; B60W 30/18145;**
**B60W 30/18163;** B60W 2510/0657;
B60W 2510/083; B60W 2510/207; B60W 2520/125;
B60W 2520/14; B60W 2520/28; B60W 2540/10;
B60W 2540/18;                    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Volvo Car Corporation**
**405 31 Göteborg (SE)**

(72) Inventors:
• **Shekhar, Rudrendu**
  **SE-405 31 Göteborg (SE)**
• **Idegren, Martin**
  **SE-405 31 Göteborg (SE)**
• **Sondhi, Eshwar**
  **SE-405 31 Göteborg (SE)**

(74) Representative: **Nederlandsch Octrooibureau**
**P.O. Box 29720**
**2502 LS The Hague (NL)**

(54) **METHOD FOR IMPROVING STABILITY OF A VEHICLE COMPRISING DUAL CLUTCHES**

(57)    Method comprising detecting that the vehicle is performing a transitional maneuver or detecting a braking request or a propulsion torque reduction while the vehicle is driving in a curve at grip limit based on first data indicative of driver intentions and/or vehicle motion state, detecting instability of the vehicle based on the first data, adjusting a torque request to the two clutches in response to the detected instability, wherein the two clutches are arranged to transmit the propulsion torque generated by the propulsion actuator to the wheels based on the torque request and based on the propulsion torque generated by the propulsion actuator, and wherein the torque request is adjusted based on the vehicle motion state and/or driver intentions such that a yaw motion of the vehicle is reduced.

**Fig. 3**

**(Cont. next page)**

(52) Cooperative Patent Classification (CPC): (Cont.)
B60W 2710/027; B60W 2720/14; B60W 2720/266;
B60W 2720/28; B60W 2720/406

**Description**

**Technical Field**

The current disclosure relates to a method and/or an apparatus for improving stability of a vehicle comprising two clutches connected to the rear and/or front wheels of the vehicle and arranged to transmit torque to the rear and/or front wheels of the vehicle.

**Background Art**

A maneuver in which there is a quick change in the motion of the vehicle, is often called a transitional maneuver. One example of such a transitional maneuver is an evasive maneuver to avoid a sudden obstacle in the path of the vehicle by rapid steering as shown in **Error! Reference source not found**.A, wherein vehicle A is performing such evasive maneuver. This induces a quick change in the direction of the vehicle, and under certain circumstances, can lead to a loss of directional stability of the vehicle.

As said, transitional maneuvers like a sudden lane change can lead to a loss of directional stability of a vehicle. When this happens, the driver is no longer able to control the heading of the vehicle by steering, and this can lead to severe accidents.

Also, when driving in a curve at the grip limit, there might be a risk for a vehicle to lose directional stability when the accelerator pedal is suddenly released, or slight brake is applied. One example of such a situation is driving on twisty country roads. In such a case, there might be a situation where, in a tight bend the vehicle is going too fast, and the driver releases the accelerator pedal or presses the brake to slow down the vehicle. This leads to transfer of load from the rear axle to the front axle which in-turn can lead to loss of directional stability.

Both situations can lead to severe accidents as the driver cannot control the vehicle's direction by steering. The problem gets exaggerated at higher vehicle speeds as this gives less time for the driver to react.

Thus, there is a need to stabilize the vehicle during transitional maneuvers or while driving in a curve at the grip limit and suddenly releasing the accelerator pedal or pressing the brake pedal, which can be achieved by applying a corrective yaw torque, which dampens the yaw motion of the vehicle. Traditionally this is done by the Electronic Stability Control (ESC) system which applies brake torque on one or more wheels, which generates forces between the tire and the road, and helps stabilize the vehicle. Although very effective, the application of brake torque by the ESC system is always accompanied by a noise from the brake actuation unit, and a sudden deceleration proportional to the applied brake torque. Due to these reasons, the ESC system is not designed to be sensitive, otherwise it could unnecessarily intervene during sporty driving (like on a racetrack), which can be perceived as intrusive by the driver. As the ESC system is not very sensitive, in some situations, it leads to delayed interventions, which makes the vehicle difficult to control for the driver.

**Summary**

To complement the ESC system, this disclosure provides a method to use a torque vectoring dual clutch (TVDC) actuator to stabilize the vehicle, by overlocking the clutches during instability situations.

Torque vectoring dual clutch (TVDC) is a type of transmission system that consists of two individual clutches driven by a propulsion actuator like an electric motor or a combustion engine. Each clutch is connected to a wheel, and the torque generated by the propulsion actuator can be unequally distributed between the left and the right wheel.

TVDC also enables overlock, when the sum of the individual clutch capacities exceeds the torque from the propulsion actuator. When a vehicle is turning, the curve-inside wheel rotates slower than the curve-outside wheel. When the clutches are overlocked, the speed difference between the curve-inside and curve-outside wheels connected to the clutches is reduced, and thus forces between the tire and the road that resists the turn and dampens the yaw motion are generated.

The present disclosure proposes a method to improve the directional stability of a vehicle by overlock interventions from the TVDC. These overlock interventions from the TVDC can be very sensitive as these are nearly not perceivable by the driver, because it neither creates noise nor deceleration unlike the ESC interventions. Thus, the yaw motion of the vehicle is dampened early, before the ESC system can intervene, which stabilizes the vehicle in a smooth manner.

In a first aspect of the disclosure, a method for a vehicle is provided, wherein the vehicle comprises two clutches connected to wheels of the vehicle and arranged to transmit torque to the wheels of the vehicle, the two clutches also being connected to a propulsion actuator, and the method comprising detecting that the vehicle is performing a transitional maneuver or detecting a braking request or a propulsion torque reduction while the vehicle is driving in a curve at grip limit based on first data indicative of driver intentions and/or vehicle motion state, detecting instability of the vehicle based on the first data, adjusting a torque request to the two clutches in response to the detected instability, wherein the two clutches are arranged to transmit the propulsion torque generated by the propulsion actuator to the wheels based on the torque request and based on the propulsion torque generated by the propulsion actuator, and wherein the torque request is adjusted based on the vehicle motion state and/or driver intentions such that a yaw motion of the vehicle is reduced. This improves the directional stability of a vehicle in case of performing a transitional maneuver or sudden release of accelerator pedal or slight brake apply during curve driving at the grip limit.

The vehicle may comprise two clutches located on a front axle of the vehicle or located on a rear axle of the vehicle. The vehicle may comprise two clutches located on the front axle and another two clutches located on the rear axle of the vehicle.

Adjusting the torque request may comprise increasing and/or decreasing the torque request to the two clutches.

Increasing the torque request may comprise increasing an individual capacity of each of the two clutches to transmit torque to the wheels such that the sum of the individual capacities of the two clutches exceeds the propulsion torque generated by the propulsion actuator. Each of the two clutches is connected to the propulsion actuator and to a corresponding wheel and comprises an individual capacity to transmit torque from the propulsion actuator to the corresponding wheel to which it is connected. The individual capacity of each of the two clutches to transmit torque to the corresponding wheel can be adjusted based on the torque request.

The torque increase may be limited to a value such that the wheels connected to the two clutches rotate at substantially the same speed. As said, the clutches can be overlocked. Overlocking the clutches increases the torque capacity of both clutches equally, such that the sum of the individual clutch torque capacity exceeds the propulsion torque from the propulsion actuator on the axle. The result is that the curve outside and the curve inside wheels are more rigidly connected, which forces them to rotate at the same speed.

The driver intentions may be based on at least one of a propulsion torque request, steering wheel angle, and brake torque request and/or may be obtained by applying mathematical models.

The vehicle motion state may be based on at least one of a lateral acceleration of the vehicle, a yaw rate of the vehicle and a rotational speed of wheels of the vehicle and/or may be obtained by applying mathematical models.

The instability of the vehicle may be detected by comparing driver intentions and vehicle motion to threshold values.

The threshold values may depend on intended vehicle attributes.

The torque request may be adjusted based on intended vehicle attributes.

Detecting that the vehicle is driving the curve at grip limit may comprise at least one of detecting that a difference between actual steering angle and a predetermined steering angle is above a steering angle difference threshold, detecting that a difference between actual yaw rate and a predetermined yaw rate is above a yaw rate difference threshold, wherein the predetermined steering angle is calculated based on at least one of lateral acceleration, yaw rate, wheel speeds and/or mathematical models, and wherein the predetermined yaw rate is calculated based on at least one of steering wheel angle, lateral acceleration, wheel speeds, and/or mathematical model. Detecting the braking request reduction may comprise detecting if a brake torque request associated with the brake request is above a brake torque threshold. Detecting the propulsion torque reduction may comprise detecting that a gradient of the propulsion torque request is below (more negative than) a propulsion torque gradient threshold value. For instance, to detect driving at the grip limit, a predetermined (theoretical) steering angle can be calculated using the lateral acceleration, yaw rate and/or wheel speeds. This can be compared to the actual steering angle from the steering wheel angle sensor. When driving close to the grip limit, these two quantities start to differ significantly from each other. The difference between these quantities can be compared to threshold values to detect driving close to the grip limit.

To avoid instability caused when braking or quickly reducing propulsion torque when driving close to the grip limit, a braking request or a propulsion torque reduction is detected if the brake torque request is above a brake torque threshold, and gradient of the propulsion torque request is below a propulsion torque gradient threshold (more negative than the threshold value).

Detecting the transitional maneuver may comprise at least one of evaluating a yaw acceleration, a rate of change of steering wheel angle, or a rate of change of lateral acceleration.

Adjusting the torque request comprises decreasing the torque request to the two clutches proportionally to an amount of understeering. The amount of understeering can be calculated using several methods. One example is to compare a theoretical steering angle to the actual steering angle. When the actual steering angle exceeds (both in positive and negative domain) the theoretical steering angle, the vehicle is said to be understeering. The theoretical steering angle can be calculated using the lateral acceleration, yaw rate and wheel speed sensor inputs.

The method may comprise adjusting the torque request to decrease the individual capacity of the two clutches such that the sum of the individual capacities of the two clutches does not exceed the propulsion torque generated by the propulsion actuator, if a braking torque request exceeds a brake torque threshold and/or if friction brake torque is applied to one of the wheels with the TVDC actuator and/or a propulsion torque request exceeds a propulsion torque threshold. This allows to avoid transferring brake torque from one wheel to the other in case of friction brake intervention on one of the wheels of the axle with the TVDC actuator, for instance, by the ESC system, as it would reduce the effectiveness of the ESC intervention. Reducing the individual capacity of the two clutches based on brake torque request avoids excessive brake slip on both wheels of the same axle. Finally, reducing the individual capacity of the two clutches based on the propulsion torque request facilitates unequal distribution of propulsion torque between the wheels, if needed, to stabilize the yaw motion of the vehicle.

According to another aspect of the disclosure, a control unit for a vehicle is provided, wherein the control unit is configured to perform the above-described method.

According to another aspect of the disclosure, a vehicle is provided, the vehicle comprising the above-described control unit, a propulsion actuator and two clutches connected to the propulsion actuator.

**Brief Description of Drawings**

Figure 1A illustrates an example of a vehicle performing a transitional maneuver.

Figure 1B illustrates a block diagram of a vehicle system according to the disclosure.

Figures 2A-2C illustrate flowcharts schematically depicting examples of methods according to the disclosure.

Figure 3 illustrates schematically a view of a vehicle according to an embodiment of the disclosure.

Figures 4 and 5 schematically illustrate forces acting on a wheel and an axis system of a vehicle, respectively.

Figure 6 shows the path of the individual wheels when a vehicle is turning, and the forces generated when the clutches are overlocked on an axle.

**Description of Embodiments**

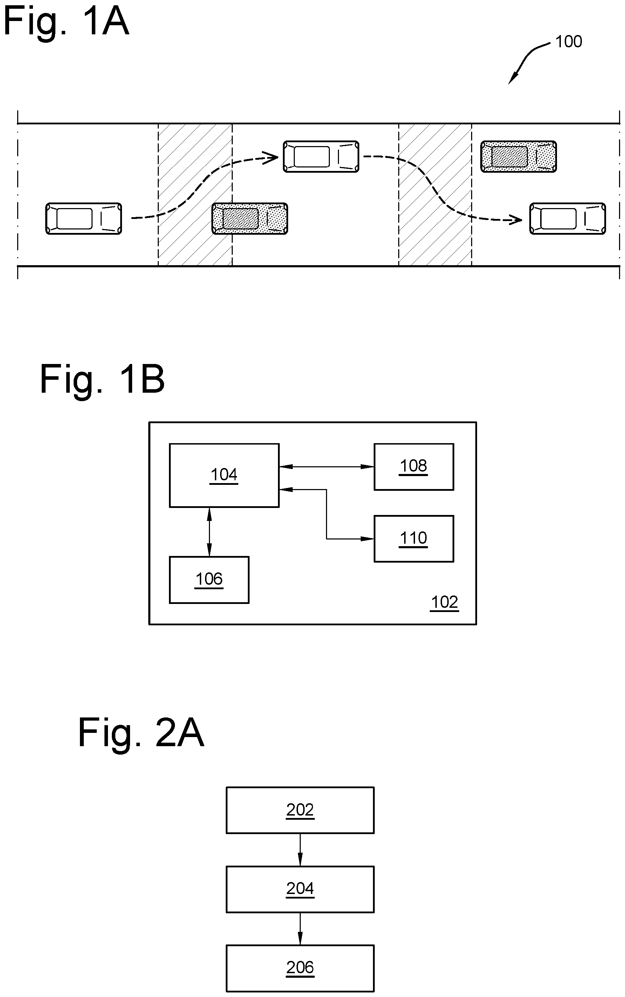

Figure 1B illustrates a block diagram of a vehicle system according to the disclosure.

Figure 2A-2C illustrate flowcharts schematically depicting examples of methods according to the disclosure.

Figure 1B illustrates a block diagram of a vehicle system 102 according to the disclosure. The operating or vehicle system 102 may comprise a control unit 104, a memory 106, a sensor unit 108, and a communication unit 110. The control unit 104 is connected to the memory 106, the sensor unit 108, and the communication unit 110. The communication unit 110 may transmit and receive information via Bluetooth, through a wireless communication network, for example, a 4G network, and/or using any other suitable communication technology.

Figures 2A-2C illustrate flowchart schematically depicting methods for a vehicle comprising two clutches connected to wheels of the vehicle and arranged to transmit torque to the wheels of the vehicle, the two clutches being connected to a propulsion actuator. The methods of Figures 2A-2C may be performed by the control unit 104 of Figure 1B.

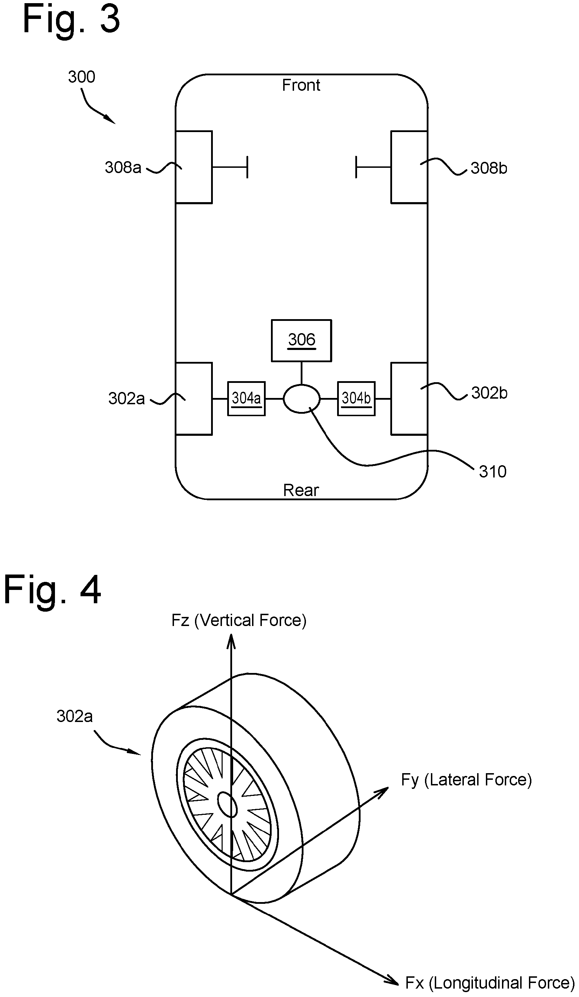

Figure 3 illustrates a view of a vehicle 300 comprising the vehicle system of Figure 1A (not shown) comprising four wheels 308a, 308b, 302a and 302b. The vehicle 300 comprises further two clutches 304a and 304b respectively connected to the rear wheels 302a and 302b and to a propulsion actuator 306. The two clutches 304 comprise a first clutch 304a and a second clutch 304 b and are configured to transmit torque to the rear wheels 302 based on a torque request generated by the control unit 104 and a propulsion torque generated by the propulsion actuator 306.

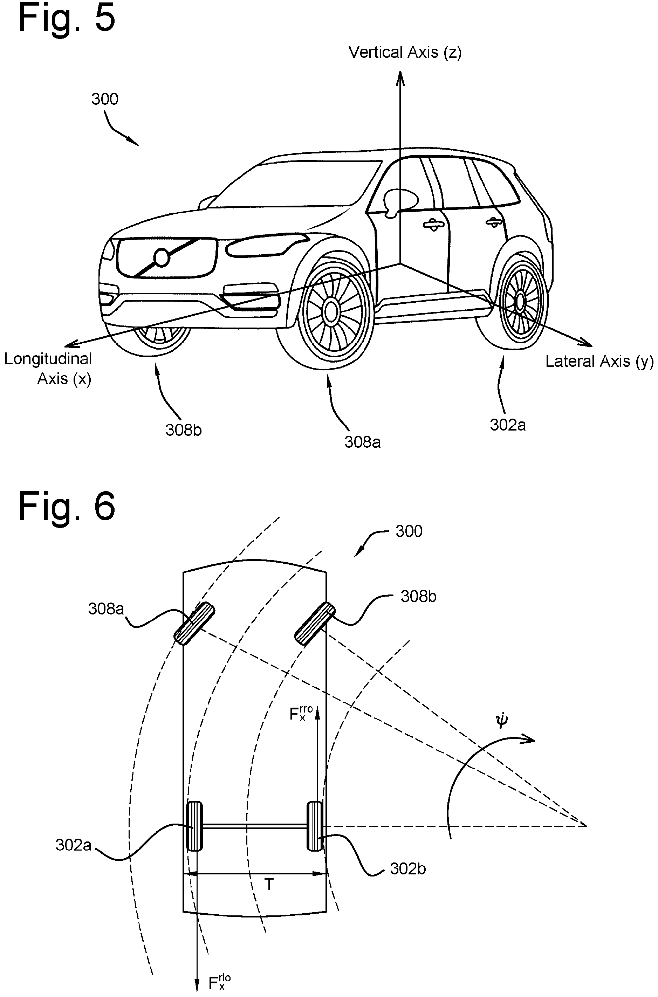

Figures 4 and 5 schematically illustrate directions of vertical, lateral and longitudinal forces that may be acting on a wheel 302a and an axis system of a vehicle 300, respectively.

Although the disclosure will be explained in relation to a vehicle 300 comprising two clutches 304a and 304b respectively connected to the rear wheels 302a and 302b and to a propulsion actuator 306, this is a non-limiting example and the disclosure applies to any vehicle having at least one torque vectoring dual clutch (TVDC) actuator, either on the front or the rear axle. That is, the disclosure also applies to a vehicle wherein two extra clutches and an extra propulsion actuator wherein the two extra clutches are respectively connected to the front wheels 308a and 308b and to the extra propulsion actuator. In the same way, the disclosure also applies to a vehicle wherein the two clutches 304a and 304b are respectively connected to the front wheels 308a and 308b, instead of to the rear wheels.

The two clutches 304 may be mechanical or hydraulic clutches or any other kind of clutches. If the clutches 304 are hydraulic ones, the pressure of the clutches may be increased or decreased based on the adjusted torque request. If the pressure is increased, the clutches 304 capacity to transmit torque to the rear wheels 302 will also be increased such that the sum of the capacity to transmit torque of the first clutch 304a and the capacity to transmit torque of the second clutch 304b is more than the propulsion torque generated by the propulsion actuator 306. If the clutches are mechanical, any other method to modify the capacity of transmitting torque to the rear wheels may be used.

As said, the methods of Figures 2A-2C may be performed by the control unit 104 of Figure 1B which may be arranged at the vehicle 300 of Figure 3.

In step 202, the method of Figure 2A comprises detecting that the vehicle 300 is performing a transitional maneuver or detecting a braking request or a propulsion torque reduction while the vehicle 300 is driving a curve at grip limit based on first data indicative of driver intentions and/or vehicle motion state. The first data is received by the processing unit 104 of the vehicle system 102. The vehicle motion state relates to the vehicle 300.

In some embodiments, detecting that the vehicle is driving the curve at grip limit in step 202 may comprise at least one of detecting that a difference between actual steering angle and a predetermined steering angle is above a steering angle difference threshold, detecting that a difference between actual yaw rate and a predetermined yaw rate is above a yaw rate difference threshold. The predetermined steering angle may be calculated based on at least one of lateral acceleration, yaw rate, wheel speeds and/or mathematical models. Also, the predetermined yaw rate may be calculated based on at least one of steering wheel angle, lateral acceleration, wheel speeds, and/or mathematical model.

In this situation (when it has been detected that the vehicle is driving close to grip limit) a braking request or a propulsion torque reduction may be detected if the brake torque request is above a brake torque threshold, and/or a gradient of the propulsion torque request is below a propulsion torque gradient threshold (more negative than the threshold value).

In other embodiments, detecting the transitional maneuver in step 202 may comprise evaluating a yaw acceleration, a rate of change of steering wheel angle, or a rate of change of lateral acceleration.

The first data indicative of a vehicle motion state used in step 202 of Figure 2A, may be based on, for instance, a lateral acceleration of the vehicle 300, a yaw rate of the vehicle 300 and/or a rotational speed of wheels 308 of the vehicle 300. The first data may be also obtained by applying mathematical models. The lateral acceleration of the vehicle 300, the yaw rate of the vehicle 300 and/or the rotational speed of any of the wheels 308 of the vehicle 300 may be received from the sensor unit 108. The sensor unit 108 may comprise an inertial measurement unit (IMU) comprising accelerometers and gyroscopes. The accelerometers may measure the lateral acceleration of the vehicle 300 and the gyroscopes may measure the yaw rate of the vehicle 300. Furthermore, the sensor unit 108 may comprise wheel speed sensor to measure the rotational speed of the wheels 308. For instance, the sensor unit may comprise four-wheel speed sensors, one for each wheel 308 of the vehicle 300. The sensor unit 108 may further comprise driver input sensors (DIS) such as a steering angle sensor to detect a steering angle of a steering wheel of the vehicle 300, a brake pedal sensor to detect a brake pedal position and/or an accelerator pedal sensor to detect an accelerator pedal position. However, the sensor unit 108 may comprise any other kind of sensors allowing to obtain the data needed.

The first data indicative of a driving intentions that may be used in step 202 may be based on at least one of a propulsion torque request, a steering wheel angle of the vehicle 300 and a brake torque request. The first data may be obtained by applying mathematical models.

After detecting, in step 202, that the vehicle is performing a transitional maneuver or detecting a braking request or a propulsion torque reduction while the vehicle is driving a curve at grip limit, the method of Figure 2A proceeds to step 204 wherein the processing unit 104 detects instability of the vehicle based on the first data.

The instability of the vehicle may be detected in step 204 by comparing driver intentions and vehicle motion to threshold values. The threshold values may depend on intended vehicle attributes.

The method proceeds after step 204 to step 206 wherein a torque request to the two clutches 304 is adjusted in response to the detected instability based on the vehicle motion state and/or driver intentions such that a yaw motion of the vehicle is reduced. The two clutches 304 are arranged to transmit the propulsion torque to the wheels 302 based on said torque request generated by the control unit 104 and based on the propulsion torque generated by the propulsion actuator 306.

In some embodiments, adjusting the torque request may comprise increasing the torque request to the two clutches 304.

In a further embodiment, increasing the torque request may comprise increasing an individual capacity of each of the two clutches 304 to transmit torque to the wheels such that the sum of the individual capacities of the two clutches 304 exceeds the propulsion torque generated by the propulsion actuator 306.

Furthermore, the method of Figure 2A may comprise adjusting the torque request to decrease the individual capacity of the two clutches such that the sum of the individual capacities of the two clutches does not exceed the propulsion torque generated by the propulsion actuator 306 if a braking request exceeds a braking threshold and/or if friction brake torque is applied to one of the wheels of the axle with the TVDC actuator and/or a propulsion torque request exceeds a propulsion torque threshold.

The method of Figure 2A allows to overlock the two clutches 304 on the axle when the vehicle 300 is in an instability situation. Overlocking the two clutches 304 increases the torque capacity of the first clutch 304a and of the second clutch 304b equally, such that the sum of the individual clutch torque capacities of each of the two clutches 304 exceeds the propulsion torque generated by the propulsion actuator 306 on the rear axle. The result is that the curve outside and the curve inside wheels 302 are more rigidly connected, which forces them to rotate at the same speed.

The driver intentions may be calculated using one or more sensor inputs (for example accelerator pedal position, steering wheel angle, brake pedal position etc.) and/or mathematical models.

The vehicle motion state may be calculated using one or more sensor inputs (for example lateral accelerometer, yaw rate, wheel speeds etc.) and/or mathematical models.

The intended vehicle attributes may be the desired behavior of the vehicle during transitional maneuvers or during curve driving at the grip limit and can be dependent on manufacturer or driver choice.

The instability of the vehicle,-due to sudden release of throttle pedal or slight brake apply during curve driving at the grip limit is detected based on first data indicative of driver intentions and/or vehicle motion state. For instance, the driver intentions may be based on at least one of a propulsion torque request, steering wheel angle, and brake torque request and/or is obtained by applying mathematical models. Quantities indicating the driver intentions may be compared to threshold values. The sensitivity of the threshold values may depend on the intended vehicle attributes. To detect driving at the grip limit, a theoretical steering angle can be calculated using the lateral acceleration, yaw rate and wheel speeds. This can be compared to the actual steering angle which can be obtained, for example, from a steering angle sensor. However, the actual steering angle may be obtained in any other suitable way using any other suitable sensor. When driving close to the grip limit, these two quantities start to differ significantly from each other. The difference between these quantities can be compared to threshold values to detect driving close to the grip limit. To detect braking and quick propulsion torque decrease during driving close to the grip limit, brake torque request can be compared to a brake torque threshold and gradient of the propulsion torque request can be compared to a propulsion torque gradient threshold.

To detect transitional maneuvers, the rate of change of lateral acceleration can be used and compared to threshold values. The rate of change of lateral acceleration can be calculated using the lateral acceleration sensor, or by calculating a lateral acceleration based on the steering wheel angle sensor, and wheel speed sensors.

As said, when detecting that the vehicle is performing a transitional maneuver or detecting a braking request or a propulsion torque reduction while the vehicle is driving a curve at grip limit, an appropriate amount of overlock may be applied to the clutches based on the vehicle motion, and if needed, driver intentions, to dampen the yaw dynamics. The magnitude of overlock may depend on the intended vehicle attributes.

The amount of overlock may be limited to a value which is needed to have equal speed on the curve-inside and curve-outside wheels, since after that value, additional overlock does not impact the yaw behavior of the vehicle.

The amount of overlock may be reduced proportionally to the amount of understeering. Vehicle motion and driver intention can be used to calculate the amount of understeering.

The amount of understeering can be calculated using several methods. One example is to compare a theoretical steering angle to the actual steering angle. When the actual steering angle exceeds (both in positive and negative domain) the theoretical steering angle, the vehicle is said to be understeering. The theoretical steering angle can be calculated using the lateral acceleration, yaw rate and wheel speed sensor inputs.

Another example to quantify understeering could be to compare a driver intended yaw rate with actual yaw rate of the vehicle. The driver intended yaw rate of the vehicle can be calculated using the lateral acceleration, steering angle and wheel speed sensor inputs. When the driver intended yaw rate exceeds the actual yaw rate, the vehicle is said to be understeering.

The overlock may be removed if the driver (human or autonomous) is braking significantly. This is done to avoid excessive brake slip on both wheels of the same axle.

The overlock may also be removed if one of the wheels on the axle having the TVDC actuator has a significant amount of friction brake torque. This is done to avoid transferring brake torque from one wheel to the other in case of friction brake intervention on one wheel by the ESC system, as it would reduce the effectiveness of the ESC intervention.

The overlock may be as well removed after detection of driving significantly under the grip limit or after a transitional maneuver based on detection of steady-state or non-transitional driving. This is done by evaluating vehicle motion state and driver intentions. Driving under the grip limit can be determined using several methods. One example is to compare a theoretical steering angle to the actual steering angle. The theoretical steering angle can be calculated using the lateral acceleration, yaw rate and wheel speed sensor inputs. When the difference between the actual steering angle and the theoretical steering angle is below a certain threshold, it can be concluded that the vehicle is driving under the grip limit.

Another approach could be using the difference between a driver intended yaw rate and the actual yaw rate of the vehicle. The driver intended yaw rate of the vehicle can be calculated using the lateral acceleration, steering angle and wheel speed sensor inputs. When the difference between the driver intended yaw rate and the actual yaw rate is below a certain threshold, it can be said that the vehicle is driving under the grip limit.

To detect steady-state non-transitional driving, the gradient of lateral acceleration calculated from steering angle or yaw acceleration and wheel speed sensors can be used. When the gradient is below a certain threshold for a certain time, steady-state non-transitional driving can be detected.

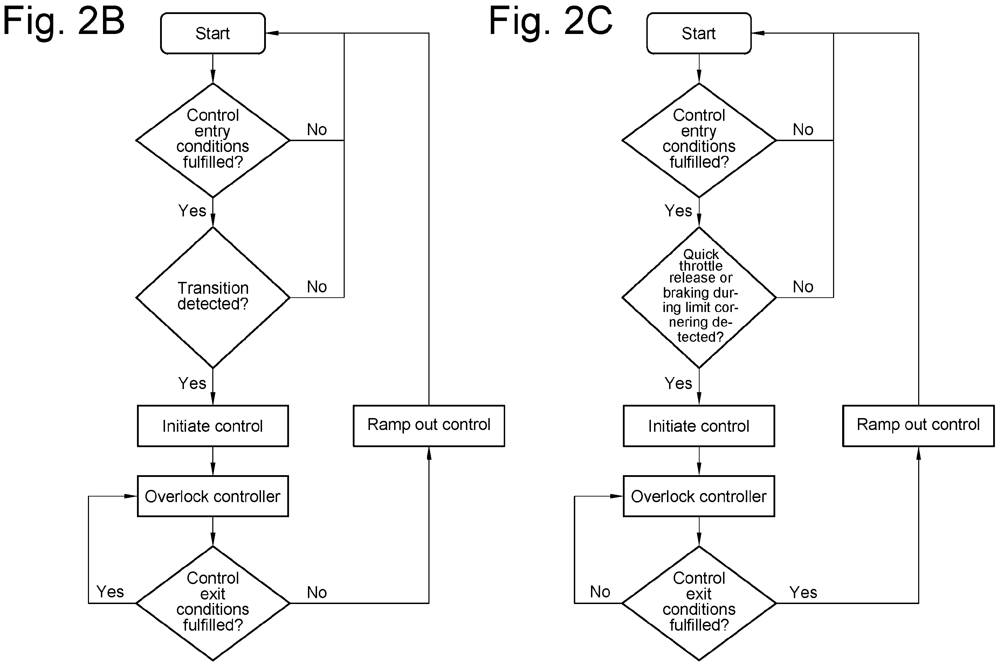

Figures 2B and 2C illustrate flowchart schematically depicting methods for a vehicle comprising two clutches connected to wheels of the vehicle and arranged to transmit torque to the wheels of the vehicle, the two clutches being connected to a propulsion actuator. Everything that has been said for Figure 2A applies to Figures 2B and 2C and will not be repeated for the sake of conciseness.

Figure 2B relates to the method that applies overlock when a transitional maneuver causing instability is detected. In step 204 of Figure 2B, the method checks whether control entry conditions are fulfilled. The control entry conditions may include checking whether current vehicle speed, driving direction, road friction, propulsive and/or braking torque are within certain thresholds. For instance, the entry condition may include forward driving direction and/or that vehicle speed is above a certain threshold. The entry condition may include any other suitable condition.

When the control entry conditions are fulfilled in step 204, the method of Figure 2B proceeds to step 206 to detect whether a transitional maneuver that compromises stability of the vehicle 300 is being performed by the vehicle 300. This may be done, for example, by evaluating the rate of change of steering angle, the yaw acceleration, the derivative of the lateral acceleration or any combination of these. Control entry conditions may include one or a combination of the following conditions: gradient of the lateral acceleration calculated from steering angle is more than a certain threshold, gradient of lateral acceleration calculated from yaw acceleration is more than a certain threshold and gradient of lateral acceleration from the lateral acceleration sensor is more than a certain threshold.

If (in step 206 of the method of Fig. 2B) it is detected that the vehicle is performing a transitional maneuver that compromises stability of the vehicle, then the method proceeds to step 208 wherein overlock is performed by increasing an individual capacity of each of the two clutches 304 to transmit torque to the wheels 302 such that the sum of the individual capacities of the two clutches 304 exceeds the propulsion torque generated by the propulsion actuator 306 in order to damp the yaw motion of the vehicle 300. The increase may be limited to a level at which the wheel speed equalizes between the sides, that is, to a level at which a rotational speed of the wheel 302a is substantially the same as a rotational speed of the wheel 302b. The increase in the individual capacities of the two clutches may be done using a proportional and derivative (PD) control on the yaw rate of the vehicle.

The method proceeds then to step 210 wherein it is checked whether an exit condition is fulfilled. If exit conditions in step 210 are not fulfilled, the method continues adjusting the torque request in step 208. When finally, the exit condition is fulfilled in step 210, the method of Figure 2B proceeds to step 212 wherein the control request will be ramped out. This means that if the control exit conditions are fulfilled, the torque request to the individual clutches from this controller will not directly jump to 0, but gradually decreased with time with a suitable rate. The exit conditions may include one or more of:

- Detection of steady-state non-transitional driving as previously explained.
- Detection of the overlock being applied for a time longer than a certain threshold.
- If one or more wheels get into active ABS (anti-lock braking system) control due to excessive friction brake torque, then control can be exited to avoid reducing the efficiency of ABS control by connecting the 2 wheels of the same axle.

Figure 2C relates to a method that applies overlock when instability due to sudden release of accelerator pedal or brake being applied during limit cornering is detected.

Like Figure 2B, the method of Figure 2C starts in step 224, wherein the method checks whether control entry conditions are fulfilled. The control entry conditions may include checking whether current vehicle speed, driving direction, road friction, propulsive and/or braking torque are within certain thresholds, and/or any of the previous explained entry conditions.

When the control entry conditions are fulfilled in step 224, the method of Figure 2C proceeds to step 226 to detect instability due to quick decrease of propulsion torque or increase of brake torque during limit cornering (i.e., while the vehicle is driving a curve at grip limit).

If (in step 226 of the method of Fig. 2C) it is detected that there is quick reduction in propulsion torque request or brake torque is applied during limit cornering, then the method proceeds to step 228 wherein overlock is performed by increasing an individual capacity of each of the two clutches 304 to transmit torque to the wheels 302 such that the sum of the individual capacities of the two clutches 304 exceeds the propulsion torque generated by the propulsion actuator 306 in order to damp the yaw motion of the vehicle 300. The increase may be limited to a level at which the wheel speed equalizes between the sides, that is, to a level at which a rotational speed of the wheel 302a is substantially the same as a rotational speed of the wheel 302b. The increase in the individual capacities of the two clutches may be done using a proportional and derivative (PD) control on the side slip angle of the rear axle of the vehicle, or a PD control on the difference between the actual yaw rate and the driver intended yaw rate of the vehicle.

As in Figure 2B, the method of Figure 2C proceeds then to step 230 wherein it is checked whether one or more exit conditions are fulfilled. If exit conditions in step 230 are not fulfilled, the method continues adjusting the torque request in step 228. When finally, the exit condition is fulfilled in step 230, the method of Figure 2C proceeds to step 232 wherein the control request will be ramped out. This means that if the control exit conditions are fulfilled, the torque request to the individual clutches from this controller will not directly jump to 0, but gradually decreased with time with a suitable rate.

The exit conditions may include driving under the grip limit, timeout due to excessively long intervention, excessive understeering, inhibition due to ABS activation or others.

Considering Figure 3, the propulsion actuator 306 generates a propulsion torque based on the propulsion torque request from the driver (the term driver through the description covers both human drivers or autonomous driven vehicles). The propulsion torque generated by the propulsion actuator 306 will be transmitted to the rear wheels 302 through the two clutches 304. To do that, a torque request indicating an instantaneous torque capacity request to each clutch will be sent. The sum of the instantaneous torque capacity requests to each clutch may equal the propulsion torque generated by the propulsion actuator 306.

For example, if the vehicle 300 is travelling in a straight line on a uniform surface and the propulsion torque generated by the propulsion actuator 306 is 2000 Newton meters (Nm), then an instantaneous torque capacity of 1000 Nm request is sent to each clutch 304 (indicated by the torque request). In this case, 1000 Nm is transmitted through clutch 304a to wheel 302a, and 1000 Nm is transmitted through clutch 304b to wheel 302b. In this case, the sum of the instantaneous torque capacity requests to each clutch 304 is 2000 Nm, which equals the propulsion torque generated by the propulsion actuator 306 2000 Nm.

If the propulsion torque generated by the propulsion actuator 306 is more than the sum of the instantaneous torque capacity requests to each clutch 304, it would lead to a slippage in the clutches 304. For example, the vehicle 300 is travelling in a straight line on a uniform surface and the propulsion torque generated by the propulsion actuator 306 is 2000 Nm. Then, if an instantaneous torque capacity of 500 Nm is requested to each clutch 304. In this case, 500 Nm is transmitted through clutch 304a to wheel 302a, and 500 Nm is transmitted through clutch 304b to wheel 302b. At the same time, each clutch 304 is slipping and dissipating the excess 1000 Nm generated by the propulsion actuator 306. Slipping means that the rotational speed at the input side of the clutch 304, which is connected to the propulsion actuator 306, and the output side of the clutch 304, which is connected to the wheels 302 are different. In this case the propulsion actuator 306 rotates faster than the rear wheels 302 since it accelerates due to the excess 1000 Nm which cannot be transmitted to the wheels 302 through the clutches 304.

If the propulsion torque generated by the propulsion actuator 306 is less than the sum of the instantaneous torque capacity request to each clutch 304, then it would lead to overlocked clutches and thus no slippage in the clutches 304. For example, if the vehicle 300 is travelling in a straight line on a uniform surface, the propulsion torque generated by the propulsion actuator 306 is 2000 Nm, and an instantaneous torque capacity of 2000 Nm is requested to each clutch 304, then in this case, 1000 Nm is transmitted through clutch 304a to wheel 302a, and 1000 Nm is transmitted through clutch 304b to wheel 302b. At the same time, each clutch 304 has an additional capacity to transmit 1000 Nm. Thus, there is no slippage in the clutches 304 and the rotation speed of the propulsion actuator 306 is directly proportional to the rotational speed of the wheels 302.

The present disclosure proposes that in certain situations the instantaneous torque capacity request to the individual clutches 304 is increased such that the clutches are overlocked (i.e. sum of the instantaneous torque capacity request to each clutch 304 is more than the torque generated by the propulsion actuator 306). Overlocking the clutches makes the left and right wheels more rigidly connected.

Fig. 6 shows a vehicle 300 driving in a curve. When the wheels 308 and 302 are allowed to rotate freely, the curve-inside wheels 302b and 308b rotate slower than the curve outside wheels 302a and 308a due to the geometry of the turn as shown in Figure 6. When the corresponding curve-inside and curve-outside wheels are rigidly connected, then they are forced to rotate at the same speed, which generates forces in the tires that oppose the turn. For example, if the two back wheels 302a and 302b are rigidly connected, they would generate forces $F_x^{rlo}$ and $F_x^{rro}$ respectively that would create a yaw torque that resists the turn. In this way, the vehicle of Figure 6 may comprise the two clutches 304 shown in Figure 3 and arranged to transmit the propulsion torque generated by the propulsion actuator 306 to the two wheels 302 based on the torque request and based on the propulsion torque generated by the propulsion actuator 306.

As the difference in wheel speed between the curve-inside 302b and the curve-outside wheel 302a needs to be minimized, a longitudinal slip, equal in magnitude to this difference, needs to be generated. To generate this longitudinal slip, a force needs to be applied to the tire, which can be calculated by using the longitudinal slip needed, and an appropriate mathematical model of the tire. This force needs to be generated by the coupling actuator (like TVDC, ELSD etc.) which is the propulsion actuator 306 in the example shown in the Figures, by applying a coupling torque, which is proportional to the force and a rolling radius R of the wheels 302.

For that, a difference between a first speed $V_l$ at which one of the two wheels 302a rotate and a second speed $V_r$ at which the other one of the two wheels 302b rotate in step 202 may be determined as $V_l - V_r = |\dot{\psi} \times T|$, wherein T is the track width between the two wheels 302 and $\dot{\psi}$ the yaw rate of the vehicle 300. Then, a slip ratio SR may be determined as $SR = (V_l - V_r) \times \frac{2}{V_l + V_r}$.

After that, a slip force $F_x^{SR}$ may be determined based on $F_x^{SR} = f(SR)$ wherein $f$ is a function of the slip ratio SR. For instance, the slip force $F_x^{SR}$ can be calculated using a linear model of the tire having a longitudinal stiffness $C_x$ such that $F_x^{SR} = SR \times C_x$.

Then, a first coupling torque $T_c^{SR}$ can be determined as $T_c^{SR} = F_x^{SR} \times R$. Then the propulsion actuator 306 can generated the first coupling torque $T_c^{SR}$ such that wheels 302 rotate at the same speed.

In another embodiment, the first coupling torque may be limited if the curve-inside wheel 302b is not able to tolerate the induced longitudinal force (the slip force $F_x^{SR}$ ). When a vehicle is cornering, the curve-outside wheels have more vertical force as compared to the curve-inside wheels due to lateral load transfer. The amount of lateral and longitudinal force a tire can generate depends on the vertical force on the tire. The reduction of vertical force on the curve-inside wheel reduces its lateral and longitudinal force capacity. During cornering, a significant amount of lateral force is generated by the curve-inside wheel which further reduces its capacity to generate longitudinal forces. The capacity of the curve-inside wheel to generate longitudinal force may be calculated using the vertical force, surface friction, net propulsive or brake torque and the lateral force generated by the tire. If this amount of longitudinal force (corresponding to the calculated capacity) is generated by the coupling actuator (propulsor actuator 306 in the example shown in the Figures) by applying a coupling torque, it would saturate the curve-inside wheel 302b, and it would start rotating at the same speed as the curve-outside wheel 302a.

The vertical force on the wheels 302 can be estimated using the longitudinal and lateral acceleration and an appropriate load transfer model of the vehicle 300.

For the curve-inside wheel 302b, the vertical force $F_z^i$ and an estimate of the surface friction coefficient $\mu$ of a road being travelled by the vehicle 300 can be used to calculate the total (longitudinal + lateral) force capacity $F_{totcap}^i$ of the curve-inside wheel 302a. This is the maximum total force the curve-inside wheel 302a can generate. For instance, the total force capacity $F_{totcap}^i$ of wheel 302a may be determined as $F_{totcap}^i = \mu \times F_z^i$ .

In this way and as explained, a vertical force $F_z^i$ acting on wheel 302b may be determined based on a longitudinal and a lateral acceleration $a_y$ of the vehicle 300, determining a total force capacity $F_{totcap}^i$ of wheel 302a based on the vertical force $F_z^i$ and a surface friction coefficient $\mu$ of a road being travelled by the vehicle 300.

When the vehicle 300 is turning, lateral forces are generated in the tires, and an estimate of the lateral force $F_y^i$ generated in the curve-inside wheel 302b can be calculated using the lateral acceleration $a_y$ of the vehicle 300 and appropriate mathematical models. The longitudinal force capacity $F_{xcap}^i$ of the curve-inside wheel 302b can be calculated from the total force capacity and the lateral force $F_y^i$ using appropriate tire models. For example, a friction-circle based tire model can be used as below such that the longitudinal force capacity $F_{xcap}^i$ may be determined as:

$$F_{xcap}^i = \sqrt{\left(F_{totcap}^i\right)^2 - \left(F_y^i\right)^2}$$

In the presence of propulsion $T_{prop}^i$ and brake torque $T_{brk}^i$ on the curve-inside wheel, a part of the longitudinal force capacity is utilized. The remaining longitudinal force capacity for the curve-inside wheel $F_{xlim}^i$ , is the force that needed to be generated by the coupling actuator (propulsor actuator 306) to saturate the curve-inside wheel, so that it rotates at the same speed as the curve-outside wheel.

Then, a second coupling torque $T_c^{lim}$ can be determined based on the longitudinal force capacity $F_{xcap}^i$ , the radius R of the wheel 302b and at least one of a propulsion torque and a brake torque being applied to wheel 302b.

The second coupling torque $T_c^{lim}$ may be determined as $T_c^{lim} = F_{xcap}^i - \left(T_{prop}^i - T_{brk}^i\right) \times R$ wherein $T_{prop}^i$ is a propulsion torque being applied to the wheel 302a located inside the curve and $T_{brk}^i$ is the brake torque being applied to wheel 302a.

Then, a minimum of the first and second coupling torques may be taken such that the coupling torque needed to equalize the speed of the curve-inside and the curve-outside wheel can be given by:

$$T_c = \min(T_c^{SR}, T_c^{lim})$$

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the host vehicle and/or one or more separate devices. In that regard, such a node may comprise an electronic control unit (ECU) or any suitable electronic device, which may be a main or central node. The systems, components and methods described herein may further comprise any computer hardware and software and/or electrical hardware known in the art configured to enable communication therebetween.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiments disclosed, but that the disclosure will include all embodiments falling within the scope of the appended claims.

## Claims

1. A method for a vehicle (300) comprising two clutches (304) connected to wheels (302) of the vehicle and arranged to transmit torque to the wheels of the vehicle, the two clutches being connected to a propulsion actuator (306), the method comprising:

   detecting (202) that the vehicle is performing a transitional maneuver or detecting a braking request or a propulsion torque reduction while the vehicle is driving in a curve at grip limit based on first data indicative of driver intentions and/or vehicle motion state;
   detecting (204) instability of the vehicle based on the first data;
   adjusting (206) a torque request to the two clutches (304) in response to the detected instability, wherein the two clutches (304) are arranged to transmit the propulsion torque generated by the propulsion actuator to the wheels (302) based on the torque request and based on the propulsion torque generated by the propulsion actuator (306), and wherein the torque request is adjusted based on the vehicle motion state and/or driver intentions such that a yaw motion of the vehicle is reduced.

2. The method of claim 1, wherein the two clutches are located on a front and/or on a rear axle of the vehicle.

3. The method according to claim 1, wherein adjusting (206) the torque request comprises increasing the torque request to the two clutches (304).

4. The method according to claim 3, wherein increasing the torque request comprises increasing an individual capacity of each of the two clutches (304) to transmit torque to the wheels such that the sum of the individual capacities of the two clutches exceeds the propulsion torque generated by the propulsion actuator (306).

5. The method of claim 4, wherein the torque increase is limited to a value such that the wheels connected to the two clutches rotate at substantially same speed.

6. The method of claim 1, wherein the driver intentions is based on at least one of a propulsion torque request, steering wheel angle, and brake torque request and/or the driver intentions is obtained by applying mathematical models, and/or wherein the vehicle motion state is based on at least one of a lateral acceleration of the vehicle, a yaw rate of the vehicle and a rotational speed of wheels of the vehicle and/or the vehicle motion state is obtained by applying mathematical models.

7. The method of claim 1, wherein the instability of the vehicle is detected by comparing driver intentions and/or vehicle motion to threshold values.

8. The method of claim 7, wherein the threshold values depend on intended vehicle attributes.

9. The method of claim 1, wherein the torque request is adjusted based on intended vehicle attributes.

10. The method of claim 1, wherein detecting that the vehicle is driving in the curve at grip limit comprises at least one of detecting that a difference between actual steering angle and a predetermined steering angle is above a steering angle difference threshold, detecting that a difference between actual yaw rate and a predetermined yaw rate is above a yaw rate difference threshold, wherein the predetermined steering angle is calculated based on at least one of lateral acceleration, yaw rate, wheel speeds and/or mathematical models, and wherein the predetermined yaw rate is calculated based on at least one of steering wheel angle, lateral acceleration, wheel speeds, and/or mathematical model, and wherein detecting the braking request reduction comprises detecting if a brake torque request associated with the brake request is above a brake torque threshold, and wherein detecting the propulsion torque reduction comprises detecting that a gradient of the propulsion torque request is below (more negative than) a propulsion torque gradient threshold value.

11. The method of claim 1, further comprising detecting the transitional maneuver by evaluating a yaw acceleration, a rate of change of steering wheel angle, or a rate of change of lateral acceleration.

12. The method of claim 1, wherein adjusting (206) the torque request comprises decreasing the torque request to the two clutches (304) proportionally to an amount of understeering.

13. The method according to claim 3, further comprising adjusting the torque request to decrease the individual capacity of the two clutches such that the sum of the individual capacities of the two clutches does not exceed the propulsion torque generated by the propulsion actuator (306) if a brake torque request exceeds a brake torque threshold and/or if friction brake torque is applied to one of the wheels connected to the two clutches and/or a propulsion torque request exceeds a propulsion torque threshold.

14. A control unit for a vehicle (300) configured to perform the method of previous claims.

15. A vehicle (300) comprising the control unit according to claim 14, a propulsion actuator and two clutches connected to the propulsion actuator.

# Fig. 1A

100

# Fig. 1B

# Fig. 2A

# Fig. 2B

```
                    ┌──────────┐
                    │  Start   │◄──────────────────┐
                    └────┬─────┘                    │
                         │                          │
                         ▼                          │
                    ╱─────────╲                     │
                   ╱  Control  ╲     No             │
                  ╱    entry     ╲──────────┐       │
                  ╲  conditions  ╱          │       │
                   ╲ fulfilled? ╱           │       │
                    ╲─────────╱             │       │
                         │ Yes              │       │
                         ▼                  │       │
                    ╱─────────╲             │       │
                   ╱           ╲    No       │       │
                  ╱ Transition  ╲───────────┤       │
                  ╲  detected?  ╱           │       │
                   ╲           ╱            │       │
                    ╲─────────╱             │       │
                         │ Yes             │       │
                         ▼                  ▼       │
                 ┌───────────────┐   ┌──────────────┐
                 │Initiate control│   │Ramp out control│
                 └───────┬───────┘   └──────────────┘
                         │                  ▲
                         ▼                  │
         ┌──────►┌───────────────┐          │
         │       │Overlock controller│       │
         │       └───────┬───────┘          │
         │               │                  │
         │               ▼                  │
         │          ╱─────────╲             │
         │   Yes   ╱  Control   ╲   No       │
         └────────╱    exit      ╲──────────┘
                  ╲  conditions  ╱
                   ╲ fulfilled? ╱
                    ╲─────────╱
```

# Fig. 2C

```
                    ┌──────────┐
                    │  Start   │◄──────────────────┐
                    └────┬─────┘                    │
                         │                          │
                         ▼                          │
                    ╱─────────╲                     │
                   ╱  Control  ╲     No             │
                  ╱    entry     ╲──────────┐       │
                  ╲  conditions  ╱          │       │
                   ╲ fulfilled? ╱           │       │
                    ╲─────────╱             │       │
                         │ Yes              │       │
                         ▼                  │       │
                    ╱─────────╲             │       │
                   ╱   Quick    ╲           │       │
                  ╱  throttle    ╲          │       │
                 ╱ release or     ╲  No      │       │
                ╱ braking dur-     ╲─────────┤       │
                ╲ ing limit cor-  ╱          │       │
                 ╲ nering de-    ╱           │       │
                  ╲  tected?    ╱            │       │
                   ╲──────────╱             │       │
                         │ Yes             │       │
                         ▼                  ▼       │
                 ┌───────────────┐   ┌──────────────┐
                 │Initiate control│   │Ramp out control│
                 └───────┬───────┘   └──────────────┘
                         │                  ▲
                         ▼                  │
         ┌──────►┌───────────────┐          │
         │       │Overlock controller│       │
         │       └───────┬───────┘          │
         │               │                  │
         │               ▼                  │
         │          ╱─────────╲             │
         │   No    ╱  Control   ╲   Yes      │
         └────────╱    exit      ╲──────────┘
                  ╲  conditions  ╱
                   ╲ fulfilled? ╱
                    ╲─────────╱
```

# Fig. 3

# Fig. 4

# Fig. 5

300

Vertical Axis (z)

Longitudinal
Axis (x)

Lateral Axis (y)

308b

308a

302a

# Fig. 6

300

308a

308b

$F_x^{rro}$

$\psi$

302a

302b

T

$F_x^{rlo}$

# EUROPEAN SEARCH REPORT

**Application Number**

EP 24 21 0140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/261115 A1 (NIESSEN HARWIN [DE] ET AL) 26 August 2021 (2021-08-26) | 1-4,6-15 | INV. B60W10/02 |
| A | * figures 1-4 * * paragraphs [0005] - [0006], [0013], [0017] - [0019], [0022], [0025] - [0027], [0044], [0061] - [0062], [0065] * * the whole document * | 5 | B60W10/04 B60W30/02 B60W30/045 B60W30/18 ADD. B60W10/16 |
| X | US 2011/087409 A1 (SEVERINSSON LARS [SE] ET AL) 14 April 2011 (2011-04-14) * figure 5 * * paragraphs [0092] - [0099] * * the whole document * | 1,14,15 | |
| A | EP 4 183 642 A1 (VOLVO CAR CORP [SE]) 24 May 2023 (2023-05-24) * figures 1-7 * * paragraphs [0054] - [0056] * * the whole document * | 1,6-11 | |

**TECHNICAL FIELDS SEARCHED (IPC)**

B60W

The present search report has been drawn up for all claims

| Place of search | Date of completion of the search | Examiner |
|---|---|---|
| Munich | 16 April 2025 | Dubreuil, Cédric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 0140

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2025

| Patent document cited in search report | | | Publication date | Patent family member(s) | | Publication date |
|---|---|---|---|---|---|---|
| US 2021261115 | A1 | | 26-08-2021 | CN | 112334353 A | 05-02-2021 |
| | | | | DE | 112018007801 A5 | 01-04-2021 |
| | | | | JP | 2021529697 A | 04-11-2021 |
| | | | | US | 2021261115 A1 | 26-08-2021 |
| | | | | WO | 2020007473 A1 | 09-01-2020 |
| US 2011087409 | A1 | | 14-04-2011 | CN | 102007322 A | 06-04-2011 |
| | | | | EP | 2274537 A1 | 19-01-2011 |
| | | | | JP | 5469160 B2 | 09-04-2014 |
| | | | | JP | 2011518998 A | 30-06-2011 |
| | | | | KR | 20110006674 A | 20-01-2011 |
| | | | | US | 2011087409 A1 | 14-04-2011 |
| | | | | WO | 2009131531 A1 | 29-10-2009 |
| EP 4183642 | A1 | | 24-05-2023 | CN | 116142191 A | 23-05-2023 |
| | | | | EP | 4183642 A1 | 24-05-2023 |
| | | | | US | 2023159018 A1 | 25-05-2023 |

EPO FORM P0459

For more details about this annex : see Official Journal of the European Patent Office, No. 12/82